Europäisches Patentamt

European Patent Office

Office européen des brevets

(11) Veröffentlichungsnummer: **0 238 713 B1**

(12) **EUROPÄISCHE PATENTSCHRIFT**

(45) Veröffentlichungstag der Patentschrift: **14.08.91**

(51) Int. Cl.⁵: **C01G 37/02, C01G 37/027**

(21) Anmeldenummer: **86114474.9**

(22) Anmeldetag: **18.10.86**

(54) **Verfahren zur Herstellung von Chrom(III)oxid.**

(30) Priorität: **25.03.86 DE 3609971**

(43) Veröffentlichungstag der Anmeldung:
**30.09.87 Patentblatt 87/40**

(45) Bekanntmachung des Hinweises auf die
Patenterteilung:
**14.08.91 Patentblatt 91/33**

(84) Benannte Vertragsstaaten:
**DE FR GB IT NL**

(56) Entgegenhaltungen:
**DD-B- 155 765**
**US-A- 4 045 544**

(73) Patentinhaber: **BASF Aktiengesellschaft**
**Carl-Bosch-Strasse 38**
**W-6700 Ludwigshafen(DE)**

(72) Erfinder: **Mueller, Norbert, Dr.**
**Maximilianstrasse 23**
**W-6701 Friedelsheim(DE)**
Erfinder: **Boettcher, Bernhard, Dr.**
**Im Langen Tal 13 a**
**W-6719 Weisenheim(DE)**
Erfinder: **Ohlinger, Manfred, Dr.**
**Anselm-Feuerbach-Strasse 13**
**W-6710 Frankenthal(DE)**
Erfinder: **Reinicke, Helmut, Dr.**
**Veilchenweg 8**
**W-6718 Gruenstadt(DE)**
Erfinder: **Honecker, Gerhard**
**Raiffeisenstrasse 13 a**
**W-6700 Ludwigshafen(DE)**

**Beschreibung**

Die Erfindung betrifft ein Verfahren zur Herstellung von Chrom(III)oxid durch Zersetzung von wasserhaltigem Ammoniumdichromat bei erhöhter Temperatur, eine Vorrichtung zur Durchführung dieses Verfahrens sowie die Verwendung des so hergestellten Chrom(III)oxids als Ausgangsmaterial für die Chromdioxid-Synthese.

Es sind eine Reihe von Verfahren bekannt, bei denen zur Herstellung von ferromagnetischem Chromdioxid von Chromoxiden oder von Mischungen von Chromoxiden mit einer durchschnittlichen Wertigkeit von mindestens 4 ausgegangen wird und das Verfahren bei erhöhtem Druck und erhöhter Temperatur in Anwesenheit von Wasser und Modifizierungsmitteln zur Verbesserung der magnetischen Eigenschaften durchgeführt wird. So beschreibt die US-PS 3 278 263 die Herstellung von Chromdioxid unter hydrothermalen Bedingungen mit Chrom(III)oxid und Chrom(VI)oxid als Ausgangsmaterialien. In ähnlicher Weise wird gemäß den US-PSen 3 451 771 und 3 696 039 vorgegangen. Die Herstellung des für diese Synthesen benötigten Chrom(III)oxids geschieht durch Ausfällen eines Chrom(III)oxidhydrats, das entweder als solches oder nach seiner Entwässerung erhalten wird. Auch die Zersetzung von Dichromaten, insbesondere die des Ammoniumdichromats ist bekannt. Da diese Reaktion, bei der das Ammoniumdichromat in Chrom(III)oxid, Stickstoff und Wasser zerfällt, exotherm verläuft, bedarf es sowohl bei der Lagerung als auch der Verarbeitung besonderer Vorsichtsmaßnahmen. Es wurde daher schon lange versucht, feuchtes Ammoniumdichromat bei der Herstellung des Chrom(III)oxids einzusetzen. So wird das feuchte Ammoniumdichromat über eine gekühlte Schnecke in einen kontinuierlichen Drehrohrofen eingebracht, in dem es sich nach der durch Aufheizen auf etwa 600°C gestarteten Reaktion aufgrund der exothermen Reaktion ohne weitere Wärmezufuhr zersetzt. Ein auf diese Weise erhaltenes Chrom(III)oxid ist zwar für die Chromdioxid-Synthese geeignet, es fällt jedoch sehr flockig und als inhomogenes Pulver an. Bei der für die weitere Verarbeitung erforderliche Kompaktierung kann daher nur ein geringer Durchsatz erreicht werden und das anfallende Pulver ist deutlich inhomogen und läßt sich zudem noch bei dem für die Chromdioxid-Synthese nötigen Anmaischung schlecht desagglomerieren. Eine nicht vollständig homogene Verteilung der Chrom(III)oxid-Teilchen in der noch Chromsäure und Dotierungsstoffe enthaltenden Reaktionsmaische wirkt sich auf die Qualität des resultierenden Chromdioxids aus.

Aufgabe der Erfindung war es daher, ein Verfahren bereitzustellen, mit welchem sich ein Chrom(III)oxid erhalten läßt, das weitgehend kompakt anfällt und ein einheitliches Teilchengrößenspektrum aufweist.

Es wurde nun überraschenderweise gefunden, daß sich durch Zersetzen von wasserhaltigem Ammoniumdichromat bei einer Temperatur von 450 bis 750°C ein Chrom(III)oxid mit den aufgabengemäß geforderten Eigenschaften erhalten läßt, wenn die Zersetzung in einem begrenzten Brennraum erfolgt, der so bemessen ist, daß sich das Volumen des Brennraums in Litern zur durchgesetzten Gewichtsmenge Ammoniumdichromat in Kilogramm pro Minute wie 1 : 1 bis 6 : 1 verhält.

In einer vorteilhaften Ausgestaltung des erfindungsgemäßen Verfahrens wird das wasserhaltige Ammoniumdichromat kontinuierlich dem Brennraum zugeführt und anschließend in einem Ofen bei einer unterhalb der Zersetzungstemperatur liegenden Temperatur ausreagiert bevor es in an sich bekannter Weise aus dem Ofen ausgetragen wird. Zweckmäßigerweise geschieht dies in einem den Brennraum umgebenden Ofen.

Das für das erfindungsgemäße Verfahren eingesetzte Ammoniumdichromat hat aus Sicherheitsgründen einen Wassergehalt zwischen 1 und 5 Gew.-%. Es wird über eine Dosiereinrichtung in gleichmäßigem Produktstrom dem Brennraum zugeführt. Nach einer einmal erforderlichen Zündung durch Erhitzen auf mehr als 200°C findet die exotherm verlaufende Reaktion in dem begrenzten Brannraum ab. Dabei ist es zweckmäßig, den Brennraum in einem an sich bekannten Drehrohrofen derart anzuordnen, daß das weitgehend aus Chrom(III)oxid bestehende Zersetzungsprodukt in den umgebenden Ofen fällt, so daß bei einer Temperatur unterhalb der Zersetzungstemperatur, beispielsweise bei 520 bis 570°C, gegebenenfalls noch vorhandene Reste des Ausgangsmaterials abreagieren können, bevor das Chrom(III)oxid ausgetragen, mit Luft im Gegenstrom gekühlt und durch Abscheidung an Filtern von den gasförmigen Zersetzungsprodukten, Stickstoff und Wasserdampf abgetrennt wird. Daran schließt sich die üblicherweise vorgenommene Kompaktierung an und gegebenenfalls noch ein Mahlen des Chrom(III)oxidschülpen.

Das nach dem erfindungsgemäßen Verfahren hergestellte Chrom(III)oxid unterscheidet sich von dem in bekannter Weise in einem großvolumigen Zersetzungsofen mit seinem niedrigen Füllgrad hergestellten dadurch, daß es grobteiliger und damit besser kompaktierbar ist, wodurch sich der Durchsatz bei gegebener Produktionseinheit beachtlich vergrößern läßt. Wenn auch das unmittelbar nach dem erfindungsgemäßen Prozeß anfallende Chrom(III)oxid einen durch Siebanalyse feststellbaren höheren Anteil größerer Agglomerate aufweist als ein nach dem Stand der Technik erhaltenen, so läßt sich dieses Produkt leichter aufteilen und ist nach dem Desagglomerieren außerdem noch feinteiliger. Während beispielsweise bei einem nach dem Stand der Technik in einem großvolumigen Zersetzungsofen erhaltenen Chrom(III)oxid 50 % der

2

EP 0 238 713 B1

Agglomerate zwischen 20 und 35 $\mu$m groß sind, sind 50 % der Agglomerate nach einem erfindungsgemäß erhaltenen Produkt 50 bis 150 $\mu$m groß. Werden die Agglomerate aber durch nur leichtes Rühren in wäßriger Suspension aufgeteilt, dann sind bei dem erfindungsgemäß erhaltenen Produkt 50 % der übrigbleibenden Agglomerate größer/gleich 6 $\mu$m, während bei dem Produkt nach dem Stand der Technik 50 % größer/gleich 11 $\mu$m, also fast doppelt so groß sind. Wenn diese Angaben auch nur als beispielhafte Angaben zum Nachweis der vorteilhaften Eigenschaften des nach dem erfindungsgemäßen Verfahrens erhältlichen Chrom(III)oxids anzusehen sind, so gilt jedoch allgemein, daß die so erhaltenen Produkte kompakter, homogener und feinteiliger anfallen und sich sehr gut desagglomerieren lassen.

Die leichte Aufteilbarkeit des nach dem erfindungsgemäßen Verfahrens hergestellten Chrom(III)oxid stellt einen besonderen Vorteil bei seiner Verwendung zur Herstellung von Chromdioxid dar. Chromdioxid wird in bekannter Weise dadurch hergestellt, daß eine Maische aus Chromsäure, Chrom(III)oxid, Dotierungsmittel und Wasser zubereitet, welche dann in einem Reaktor bei 100 bis 700 bar Temperaturen von 200 bis 600° C ausgesetzt wird, wobei sich das Chromdioxid bildet. Diese leichtere Aufteilbarkeit des Chrom-(III)oxids, welches nach dem erfindungsgemäßen Verfahren hergestellt wurde, hat zur Folge, daß unter sonst gleichen Dispergierbedingungen eine homogenere Maische erhalten wird, wodurch dann ein engeres Teilchengrößenspektrum des Chromdioxids resultiert. Mit einem derart verbesserten Chromdioxid lassen sich aber magnetische Aufzeichnungsträger erhalten, die sich durch eine verbesserte Kopierdämpfung und ein niedrigeres Rauschen bei sonst gleichen übrigen elektroakustischen Eigenschaften auszeichnen.

Ausgehend von der bekannten Durchführung der Zersetzung von Ammoniumdichromat in einem Drehrohrofen wird das erfindungsgemäße Verfahren in einem begrenzten Brennraum durchgeführt. Das Volumen dieses Brennraums ohne Zuführungseinrichtung (in Litern) hängt gemäß dem erfindungsgemäßen Verfahren vom Durchsatz der Ammoniumdichromatmenge (in Kilogramm pro Minute) ab, wobei sich das Verhältnis zwischen 1:1 bis 6:1 bewegt. Die Vorrichtung zur Durchführung des erfindungsgemäßen Verfahrens ist nun dadurch charakterisiert, daß sich der Durchmesser dieses Brennraums zu seiner Länge wie 1:2 bis 2:1 verhält. In einer zweckmäßigen Ausgestaltung der Vorrichtung ist dieser Brennraum röhrenförmig. Wird gemäß der vorteilhaften Ausgestaltung des erfindungsgemäßen Verfahrens vorgegangen, dann ist die Vorrichtung derart ausgebildet, daß sich der Brennraum in einem ihn umgebenden Ofen eingebaut ist, wobei sich der Durchmesser ($d_1$) des Brennraums zum Durchmesser des Ofens ($d_2$) wie 1:4 bis 3:4 verhält. An diesem Ofen schließen sich dann die bekannten Abtrenn- und Konfektioniervorrichtung an.

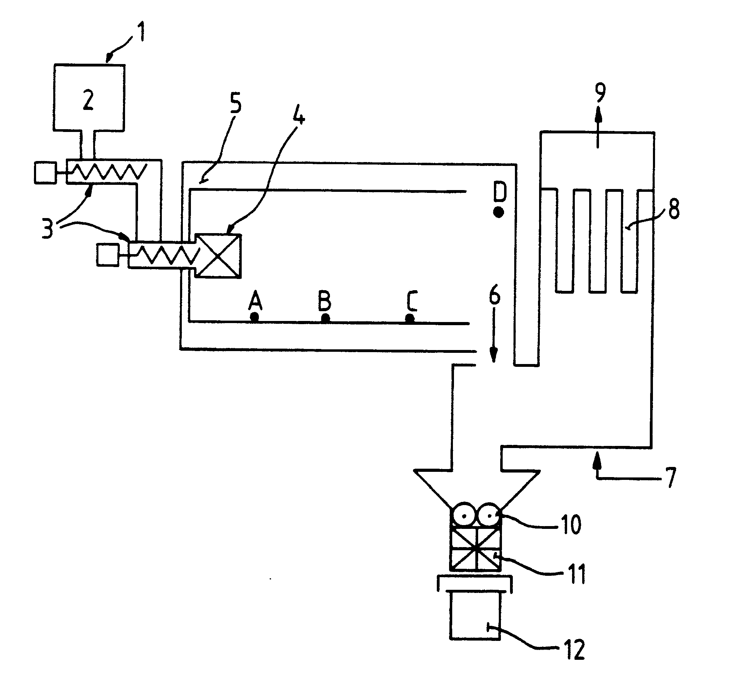

In der Abbildung sei die Vorrichtung zusammen mit den üblichen Zufuhr- und Austrageinrichtungen beispielhaft skizziert.

Aus dem Vorratsbehälter 1 wird das wasserhaltige Ammoniumdichromat 2 über Dosiereinrichtungen 3 dem Brennraum 4 zugeführt, in dem die Zersetzung stattfindet. Dieser Brennraum befindet sich zentriert zu Beginn des Drehrohrofens 5. In diesen fällt das bei der Zersetzungsreaktion entstehende Chrom(III)oxid und wird bei 6 zusammen mit dem entstandenen Stickstoff und Wasserdampf aus dem Ofen ausgetragen. Die Abgase und das mitgerissene Chrom(III)oxid werden durch den bei 7 eingeblasenen Luftstrom abgekühlt, der Feststoff am Filter 8 abgeschieden und das Abgas entweicht bei 9. Das an den Filtern abgeschiedene Material wird zusammen mit dem direkt bei 6 anfallenden Feststoff in der Kompaktierungsanlage 10 verdichtet, in der Mühle 11 gemahlen und in die Vorratsbehälter 12 eingefüllt. Zur Überwachung des Temperaturverlaufs befinden sich die Meßstellen A bis D am Drehrohrofen.

Anhand von Beispielen und Vergleichsversuchen sei das erfindungsgemäße Verfahren sowie die entsprechende Vorrichtung näher erläutert und die Eigenschaften des jeweils resultierenden Endprodukts im Zusammenhang mit der Chromdioxidsynthese dargelegt.

Vergleichsversuch 1

Nach dem Stand der Technik wurde in einen kontinuierlich betriebenen Drehrohrofen von 3 m Länge und einem Durchmesser von 80 cm Ammoniumdichromat mit 1,5 % Wasseranteil (ADC) mit einer Geschwindigkeit von 169 kg/h über eine gekühlte Schnecke eingetragen. Nach dem Start der Reaktion durch Aufheizen des Ofens auf ca. 600° C erhält sich die exotherme Reaktion ohne Wärmezufuhr und über die Ofenlänge stellten sich folgende Produkttemperaturen ein: Meßstelle A. 690° C, Meßstelle B. 540° C, Meßstelle C. 450° C, Abgastemperatur, Meßstelle D 200° C. Mit Luft wurde das $Cr_2O_3$ im Gegenstrom auf unter 100° C abgekühlt, kompaktiert und anschließend gemahlen. Das auf diese Weise hergestellte Produkt ließ sich nur schwer und mit geringem Durchsatz (<100 kg/h) kompaktieren. An dem resultierenden Produkt wurden folgende Parameter bestimmt und in der Tabelle 1 angegeben:
1. Stampfdichte
Die Stampfdichte $\rho$[g/cm³] wurde gemäß DIN 53 194 bestimmt.
2. Spezifische Oberfläche

3

Die spezifische Oberfläche SSA [m²/g] wurde gemäß DIN 66 132 mit einem Ströhlein-Areameter (Firma Ströhlein, Düsseldorf, BRD) nach dem Einpunkt-Differenz-Verfahren nach Haul und Dümbgen bestimmt.

3. Siebanalyse

Die Siebanalyse wird entsprechend DIN 53734 mit einem Luftstrahlsieb durchgeführt.

4. Cilas

Die Bestimmung der Teilchenagglomerat-Verteilung erfolgt nach A. Bürkholz u. R. Pohlke "Laserdefraction Spectrometer Experience in Particle Size Analysis" in Particle Characteritations Hep 1, 1984, Seiten 153-160.

Beispiel 1

In den im Vergleichsversuch eingesetzten Drehrohrofen wurde zusätzlich ein Rohr von 38 cm Länge und einem Durchmesser von 30 cm mit einer eingebauten Transportwendel zentrisch an der Einfüllöffnung des Ofens angebracht. In diesem röhrenförmigen Brennraum fand die Zersetzung des ADC statt. Die Temperaturverteilung an den Meßstellen A bis C im Drehrohrofen ergab sich zu 540 bis 560° C, während die Abgastemperatur (Meßstelle D) 250° C war. Durch den Einbau dieses Reaktionsraumes ließ sich der Durchsatz bei der Kompaktierung auf 200 kg/h steigern und außerdem die Stopfdichte zwischen 0,6 und 1,0 g/cm³ variieren. Die Meßergebnisse am resultierenden Chrom(III)oxid sind in Tabelle 1 angegeben.

Tabelle 1

| | $\rho$ [g/cm³] | SSA [m²/g] | Siebanalyse in [µm] | | | Cilas in [µm] | | |
|---|---|---|---|---|---|---|---|---|
| | | | > 500 | 100-500 | < 100 | > 20 | 1-20 | < 1 |
| Beispiel 1 | 0,79 | 44,1 | 15 % | 30 % | 55 % | 22 % | 64 % | 12 % |
| " 1 | 0,83 | 43,9 | 23 % | 35 % | 38 % | 15 % | 69 % | 16 % |
| Vergl.-Vers. 1 | 0,75 | 43,9 | 0 % | 15 % | 85 % | 32 % | 57 % | 10 % |

Beispiel 2

A. In einem Dispergierkessel wurden 136 kg CrO₃ in 52 Litern Wasser zu 60 % aufgelöst und der Rest zusammen mit 0,15 Gew.-% Sb₂O₃ und 1,3 Gew.-% Fe₂O₃ (jeweils bezogen auf das resultierende CrO₂ auf eine Teilchengröße von kleiner 0,1 mm gemahlen. Dazu wurden dann 68 kg eines gemäß Beispiel 1 hergestellten Cr₂O₃ [0,79 g/cm³] gegeben und unter intensivem Rühren innerhalb von 20 Minuten zu einer homogenen Paste vermischt. Diese Paste wurde nun wie in Beispiel 1 der EP-B 27640 beschrieben in einen Autoklaven eingefüllt und das CrO₂ synthetisiert.

An dem resultierenden Chromdioxid wurden die magnetischen Eigenschaften mittels eines Schwingmagnetometers in einem Meßfeld von 160 kA/m bei einer mittleren Probendichte ρ in [g/cm³] bestimmt, und zwar die Koerzitivfeldstärke $H_c$ in [kA/m], sowie die spezifische Remanenz $M_r/\rho$ und die spezifische Sättigungsmagnetisierung $M_s/\rho$ in [nTm³/g].

Die Meßwerte sind in Tabelle 2 angegeben.

B. In einer 1000 Volumenteile fassenden zylindrischen Stahlmühle, in welcher 1000 Teile Stahlkugeln mit einem Durchmesser zwischen 4 und 7 mm enthalten sind, wurden 115 Teile eines gemäß Beispiel 2 hergestellten Chromdioxids, 2 Teile Zinkstearat, 1,5 Teile Sojalecithin, 3 Teile eines Gemisches flüssiger Fettsäuren mit einem Schmelzpunkt zwischen 50 und 59° C, 110 Teile Gemisches aus gleichen Teilen Tetrahydrofuran und 1,4 Dioxan sowie 200 Teilen einer 15%igen Bindemittellösung, hergestellt durch Lösen von 19,5 Teilen eines elastomeren, thermoplastischen Polyurethans (erhalten gemäß DT-AS 11 06 959 aus Adipinsäure, 1,4 Butandiol und 4,4'-Diphenylisocyanatodiphenylmethan) und 10,5 Teilen eines Vinylchlorid-Polymerisats aus 80 Teilen Vinylchlorid, 10 Teilen Dimethylmaleinat in 170 Teilen eines Gemisches aus gleichen Teilen Tetrahydrofuran und 1,4-Dioxan eingebracht. Die Mischung wurde 5 Tage dispergiert, die erhaltene Dispersion unter Druck durch eine Glasfaser-Papier-Filterschicht filtriert und auf einer üblichen Beschichtungsmaschine mittels eines Linealgießers in einer solchen Dicke auf eine 12 μm dicke Polyäthylenterephthalatfolie aufgebracht, daß sich nach dem Trocknen und Kalandrieren eine Trockenschichtdicke von etwa 4,5 μm ergab. Unmittelbar nach dem Aufgießen der flüssigen Dispersion wurden die nadelförmigen Chromdioxidteilchen durch ein Magnetfeld längs der Aufzeichnungsrichtung orientiert. Die Oberfläche der Magnetschicht wies eine mittlere Rauhigkeit Rz, gemessen nach DIN 4756, Blatt 1, Abschnitt 2.3.3, von 0,08 bis 0,10 μm auf. Die beschichtete Folie wurde in 3,81 mm breite Magnetbänder geschnitten und wie folgt geprüft:

Magnetische Eigenschaften

Die Bestimmung der magnetischen Eigenschaften der resultierenden Magnetbänder erfolgte mittels eines Schwingmagnetometers bei einem Meßfeld von 160 kA/m. Dabei wurde die Koerzitivfeldstärke Hc in [kA/m], die remanente Magnetisierung Mr und die Sättigungsmagnetisierung $M_s$ in [mT] gemessen, sowie der Ausrichtufaktor Rf als der Quotient aus der Remanenz längs der magnetischen Vorzugsrichtung zu derjenigen in Querrichtung errechnet.

Elektroakustische Eigenschaften

Die Messung der elektroakustischen Banddaten erfolgte nach DIN 45 512, Blatt II gegen das Bezugsband 54592 A (= 0 dB). Gemessen wurde Aussteuerbarkeit $A_T$ bei 1 kHz und $A_H$ bei 10 kHz, die Empfindlichkeit $E_T$ bei 1 kHz und $E_H$ bei 10 kHz, der Ruhegeräuschspannungsabstand $RG_o$ und die Kopierdämpfung Ko.

Die Meßergebnisse sind in Tabelle 2 angegeben.

Beispiel 3

Die Beispiele 2 wurden mit einem gemäß Beispiel 1 hergestellten Chrom(III)oxid (mit 0,83 $g/cm^3$) wiederholt. Die Meßergebnisse sind in Tabelle 2 angegeben.

Vergleichsversuch 2

Ein gemäß Vergleichsversuch 1 hergestelltes Chrom(III)oxid wurde wie in Beispiel 2 beschrieben verarbeitet. Die Meßergebnisse sind in der Tabelle 2 angegeben.

Tabelle 2

| | Beispiele | | Vergl.-Vers. |
| | 2 | 3 | 2 |
|---|---|---|---|
| CrO$_2$-Pulver: | | | |
| SSA [m$^2$/g] | 27,8 | 27,4 | 28,2 |
| $\rho$ [g/cm$^3$] | 1,36 | 1,34 | 1,35 |
| H$_c$ [kA/m] | 48,3 | 49 | 49,7 |
| Mr/$\rho$ [nTm$^3$/g] | 43,7 | 43,7 | 44 |
| M$_m$/$\rho$ [nTm$^3$/g] | 76,8 | 76,9 | 77,2 |
| CrO$_2$-Band: | | | |
| d [μm] | 4,5 | 4,9 | 4,8 |
| H$_c$ [kA/m] | 48,7 | 49,2 | 49,8 |
| M$_r$ [mT] | 176 | 173 | 167 |
| M$_m$ [mT] | 200 | 196 | 188 |
| R$_f$ | 2,75 | 2,81 | 2,83 |
| A$_T$ [dB] | 0,2 | 0,4 | -0,2 |
| A$_H$ [dB] | 4,5 | 4,5 | 4,0 |
| E$_T$ [dB] | -0,6 | -0,7 | -0,5 |
| E$_H$ [dB] | 3,5 | 3,5 | 3,0 |
| RG$_o$ [dB] | 1,5 | 1,7 | 1,2 |
| K$_o$ [dB] | 57 | 56 | 54 |

**Patentansprüche**

1. Verfahren zur Herstellung von Chrom(III)oxid durch Zersetzen von wasserhaltigen Ammoniumdichromat bei einer Temperatur von 450 bis 750° C, dadurch gekennzeichnet, daß die Zersetzung in einem begrenzten Brennraum erfolgt, der so bemessen ist, daß sich das Volumen des Brennraums in Litern zur durchgesetzten Gewichtsmenge in Kilogramm pro Minute Ammoniumdichromat wie 1:1 bis 6:1 verhält.

2. Verfahren gemäß Anspruch 1, dadurch gekennzeichnet, daß das wasserhaltige Ammoniumdichromat kontinuierlich dem Brennraum zugeführt wird und anschließend in einem Ofen bei einer unterhalb der Zersetzungstemperatur liegenden Temperatur ausreagiert bevor es in an sich bekannter Weise aus dem Ofen ausgetragen wird.

3. Verwendung des nach einem der Ansprüche 1 und 2 hergestellten Chrom(III)oxids zusammen mit einer Chrom(VI)verbindung und üblichen Zusatzstoffen zur Synthese von Chromdioxid.

**Claims**

1. A process for the preparation of chromium(III) oxide by decomposing hydrated ammonium dichromate at from 450 to 750° C, wherein the decomposition is carried out in a restricted combustion space which is such that the ratio of the volume of the combustion space in liters to the weight of ammonium dichromate throughput, in kg per minute, is from 1:1 to 6:1.

2. A process as claimed in claim 1, wherein the hydrated ammonium dichromate is fed continuously into the combustion space and then reacted to completion in a furnace at a temperature below the decomposition temperature before being discharged from the furnace in a conventional manner.

3. Use of a chromium(III) oxide prepared as claimed in claim 1 or 2 together with a chromium(VI) compound and conventional additives for the synthesis of chromium dioxide.

**Revendications**

1. Procédé de préparation d'oxyde de chrome-(III) par décomposition du bichromate d'ammonium aqueux à une température de 450 à 750 degrés C, caractérisé en ce que la décomposition est réalisée dans une chambre de combustion limitée, ayant des dimensions telles que son volume, en litres, est dans un rapport de 1 : 1 à 6 : 1 avec la quantité de bichromate d'ammonium introduite en kilogrammes par minute.

2. Procédé selon la revendication 1, caractérisé en ce que le bichromate d'ammonium aqueux est introduit en continu dans la chambre de combustion puis soumis à réaction complète dans un four à une température inférieure à la température de décomposition avant évacuation du produit de réaction, de manière connue en soi, du four.

3. Utilisation de l'oxyde de chrome-(III) préparé selon l'une des revendications 1 et 2, avec un composé du chrome-(VI) et des additifs usuels, pour la synthèse du bioxyde de chrome.